# Europäisches Patentamt

## European Patent Office

## Office européen des brevets

(19)

(11) Veröffentlichungsnummer: **0 316 753 B1**

(12) ## EUROPÄISCHE PATENTSCHRIFT

(45) Veröffentlichungstag der Patentschrift: **23.12.92**

(51) Int. Cl.⁵: **C09J 7/02**, C08F 265/06, C08F 299/02, C08L 51/00

(21) Anmeldenummer: **88118701.7**

(22) Anmeldetag: **10.11.88**

---

(54) **Verfahren zur Herstellung von wasserverdünnbaren Bindemittelzusammensetzungen für heisssiegelbare Überzüge auf Aluminiumfolien und mit diesen Bindemitteln formulierte Heisssiegellacke.**

---

(30) Priorität: **18.11.87 AT 3040/87**

(43) Veröffentlichungstag der Anmeldung:
**24.05.89 Patentblatt 89/21**

(45) Bekanntmachung des Hinweises auf die Patenterteilung:
**23.12.92 Patentblatt 92/52**

(84) Benannte Vertragsstaaten:
**BE CH DE ES FR GB GR IT LI NL SE**

(56) Entgegenhaltungen:
**EP-A- 0 184 445**
**FR-A- 1 543 042**

**CHEMICAL ABSTRACTS, vol. 84, no. 18, 3 Mai 1976 Columbus, Ohio, USA Seite 91; linke Spalte; ref. no. 123508P**

(73) Patentinhaber: **VIANOVA KUNSTHARZ AKTIEN-GESELLSCHAFT**
**Postfach 191 Leechgasse 21**
**A-8011 Graz(AT)**

(72) Erfinder: **Tulacs, Laszlo, Dipl.-Ing.**
**Münzgrafengürtel 21**
**A-8010 Graz(AT)**
Erfinder: **Labenbacher, Adolf**
**Stiftingtalstrasse 198**
**A-8010 Graz(AT)**
Erfinder: **Tümmler, Peter, Dr.**
**Grillparzerstrasse 6**
**A-8010 Graz(AT)**

---

EP 0 316 753 B1

**Beschreibung**

Die Erfindung betrifft ein Verfahren zur Herstellung von wasserverdünnbaren Bindemittelzusammensetzungen auf der Basis von thermoplastischen Copolymerisaten für heißsiegelbare Überzüge auf Aluminiumfolien, sowie die mit diesen Bindemitteln formulierten Heißsiegellacke.

In der Verpackungsindustrie werden beschichtete Aluminiumfolien für die Abdeckung diverser Behälter, z. B. Polystyrolbecher zur portionierten Verpackung von Milchprodukten etc., in großer Menge eingesetzt. Die Beschichtung dient dabei zur "Versiegelung", d. h. zum luftdichten Verbinden des Behälters mit der Folie unter Hitzeeinwirkung.

Die bisher hauptsächlich in der Praxis eingesetzten Beschichtungsmittel sind Polymere, die in organischen Lösemitteln gelöst sind und aufgrund des für den Anwendungszweck notwendigen hohen Molekulargewichts nur bei relativ niedrigem Festharzgehalt verarbeitet werden. Es handelt sich dabei um Polymerisate auf der Basis von Methacrylsäureestern, Styrol-Butadien-, Vinylacetat-Vinylchlorid-copolymerenoder Polypropylenen.

Aus ökologischen und wirtschaftlichen Gründen war es wünschenswert, Bindemittel auf Wasserbasis für diesen Einsatzzweck zu entwickeln. Da die Bindemittel äußerst divergierende Eigenschaften, wie gute Wasserlöslichkeit bei hohem Molekulargewicht und besonderer Wasserfestigkeit, sowie Geschmacksfreiheit und gute Siegelfähigkeit aufweisen müssen, war es notwendig, ein neues Aufbausystem für die Polymeren zu finden.

Die gestellte Aufgabe wurde einerseits durch ein dreistufiges Verfahren zur Herstellung der Bindemittel und andererseits eine gezielte Auswahl der eingesetzten Hilfslösemitteln erfüllt.

Die Erfindung betrifft demgemäß ein Verfahren zur Herstellung von wasserverdünnbaren Bindemittelzusammensetzungen für heißsiegelbare Überzüge auf Aluminiumfolien auf der Basis von thermoplastischen Acrylcopolymeren, welches dadurch gekennzeichnet ist, daß man

(A) in einem organischen Lösemittel ein weitgehend radikalfreies Copolymer aus (Meth)-acrylsäurealkylestern, deren Alkylreste 1 bis 4 C-Atome aufweisen, und 0,3 bis 1,0 Gew.-% (bezogen auf die Summe der eingesetzten Monomeren) Glycidyl(meth)acrylat herstellt, wobei das Copolymer eine Grenzviskositätszahl ($CHCl_3$, 20°C) von 30 bis 50 ml/g und eine aus der Monomerenzusammensetzung berechnete Glasübergangstemperatur von 30 bis 60° aufweist,

(B) die Oxirangruppen des Copolymers mit der äquivalenten Menge (Meth)acrylsäure umsetzt und,

(C) gegebenenfalls nach Zugabe eines die Molekularmasse regelnden Lösemittels, eine weitere Monomerenmischung, bestehend aus (Meth)acrylsäurealkylestern, deren Alkylreste 1 bis 4 C-Atome aufweisen, und einer Menge (Meth)acrylsäure, die einer Säurezahl für das Endprodukt von 30 bis 60 mg KOH/g entspricht, copolymerisiert, mit der Maßgabe, daß die Grenzviskositätszahl ($CHCl_3$, 20°C) des Endproduktes nicht unter 25 ml/g, vorzugsweise bei 30 bis 40 ml/g liegt.

Die Erfindung betrifft weiters die gemäß diesem Verfahren hergestellten Copolymerisate.

Weiters betrifft die Erfindung Heißsiegellacke auf der Basis der erfindungsgemäß hergestellten Copolymerisate, bestehend im wesentlichen aus 20 bis 30 Gew.-% des Copolymeren, 15 bis 20 Gew.-% eines Lösemittels aus der Gruppe

(a) der $C_2$-$C_3$-Alkanole, (b) der $C_5$-$C_6$-Alkanolacetate, (c) der Ketone mit mindestens einem $C_5 C_6$-Alkylrest oder (d) Toluol oder Xylol oder Mischungen dieser Lösemittel, und 50 bis 65 Gew.-% Wasser, welches die für die Erzielung der Wasserverdünnbarkeit durch teilweise oder vollständige Neutralisation der Carboxylgruppen notwendige Menge Ammoniak enthält, sowie gegebenenfalls den üblichen Lackhilfsmitteln.

Weiters betrifft die Erfindung die Verwendung der Heißsiegellacke zur Beschichtung von Aluminiumfolien für die Abdeckung von Verpackungen, insbesonders für Lebensmittel, wie Milchprodukte.

Die erfindungsgemäß hergestellten Produkte zeigen praxisgerechte Verarbeitungseigenschaften, d. h. die für eine kontinuierliche Folienbeschichtung notwendige Rheologie, rasche physikalische Antrocknung, gute Heißsiegelfähigkeit und selbstverständlich die für Verpakkungen notwendige Beständigkeit (Sterilisationsfestigkeit) und Geschmacksfreiheit.

Das in der Stufe (A) hergestellte Copolymer besteht im wesentlichen aus Methacrylsäurealkylestern, wobei die Alkylreste 1 bis 4 C-Atome aufweisen. Die entsprechenden Acrylsäureester können bis zu einer Menge von etwa 20 Gew.-%, bezogen auf das Monomerengewicht in der Stufe (A) mitverwendet werden. Wesentlich für dieses Basispolymer ist ein Gehalt von Glycidyl(meth)acrylat in einer Menge, die 0,3 bis 1,0 Gew.-%, bezogen auf die Summe der in dieser Stufe eingesetzten Monomeren, entspricht. Zur Erzielung der geforderten Produkteigenschaften muß das Copolymer eine Grenzviskositätszahl, gemessen in Chloroform bei 20°C, von 30 bis 50 ml/g aufweisen. Die aus der Monomerenzusammensetzung berechnete Glasübergangstemperatur soll zwischen 30 und 60°C liegen.

Bevorzugt werden für diese Stufen die Monomeren in folgender Zusammensetzung ausgewählt, wobei die Summe der Gewichtsprozente jeweils 100 ergeben muß:

20 bis 45 Gew.-% Methylmethacrylat

5 bis 20 Gew.-% Ethyl(meth)acrylat

40 bis 60 Gew.-% Butylmethacrylat

5 bis 20 Gew.-% Isobutylmethacrylat

0,5 bis 0,8 Gew.-% Glycidylacrylat und/oder Glycidylmethacrylat

Die Copolymerisation der Monomeren erfolgt in Lösung in organischen Lösemitteln. Dabei werden vorteilhafterweise solche Lösemittel als Polymerisationsmedium ausgewählt, die auch später in der Lackformulierung benötigt werden. Die in dieser Stufe eingesetzten Lösemittel können auch im weiteren Verlauf des Verfahrens destillativ entfernt und teilweise oder vollständig durch andere ersetzt werden.

Für diese Verfahrensstufe und die spätere Lackformulierung günstige Lösemittel sind aromatische Lösemittel, wie Toluol oder Xylol, niedere Alkohole, wie Ethanol oder die Propanole, die Acetate von Alkoholen mit mehr als 4 C-Atomen, vorzugsweise Amylacetat, oder Ketone mit mindestens einem $C_5$-$C_6$-Alkylrest, wie das Methylamylketon sowie Mischungen dieser Lösemittel.

Die Copolymerisation erfolgt in bekannter Weise in Gegenwart von Initiatoren, die entsprechend der gewünschten Reaktionstemperatur ausgewählt werden. Die Reaktion wird bis zu einem Polymerisationsumsatz von mindestens 99 % geführt. Für die zweite Reaktionsstufe ist es von wesentlicher Bedeutung, daß ein weitgehend radikalfreies Polymer vorliegt, was in einfacher Weise durch eine Nachreaktionszeit von mindestens 3 Stunden erreicht wird.

In der Stufe (B) des Verfahrens werden die Oxirangruppen des Copolymers mit der äquivalenten Menge Acrylsäure und/oder Methacrylsäure reagiert. Zur Vermeidung einer Homopolymerisation der (Meth)acrylsäure wird die Acrylsäure mit Inhibitoren, wie Hydrochinon oder Nitrobenzol stabilisiert und in Form einer Lösung in einem inerten Lösemittel zugegeben. Die Zugabe erfolgt bei ca. 60°C. Die Temperatur wird dann, vorzugsweise unter Einblasen von Luft, auf 130 bis 140°C gesteigert. Vorzugsweise erfolgt die Reaktion in Gegenwart eines Veresterungskatalysators, wie Triphenylphosphin.

Das Polymer verfügt nun über polymerisationsfähige Stellen, an welche in der 3. Verfahrensstufe Copolymerketten, die die für die Wasserverdünnbarkeit nach teilweiser oder vollständiger Neutralisation notwendigen Carboxylgruppen aufweisen, aufpolymerisiert werden.

Diese Copolymerketten sollen einen relativ niedrigmolekularen Anteil darstellen. Es ist jedoch darauf zu achten, daß der Anteil an nicht mit den Polymeren verknüpften Copolymeranteilen möglichst niedrig gehalten wird; ein stärkeres Absinken der Grenzviskositätszahl deutet auf eine solche unerwünschte Reaktion hin.

Vorteilhafterweise erfolgt daher die Zugabe der Monomeren kontinuierlich innerhalb von mehreren Stunden; eine mehrmalige Nachgabe von Initiator hat sich ebenfalls als zweckdienlich erwiesen. Zur Erzielung der entsprechenden Molekularmassenverteilung erfolgt diese Verfahrensstufe vorteilhafterweise in Gegenwart eines regelnden Lösemittels, wie Ethanol oder Isopropanol.

Als Hauptmonomere, neben der (Meth)acrylsäure, dienen auch in dieser Stufe Methacrylsäure $C_1$-$C_4$-alkylester. Daneben können auch in dieser Stufe die entsprechenden Acrylsäureester in untergeordneten Mengen eingesetzt werden. Die eingesetzte Menge an Acrylsäure und/oder Methacrylsäure soll für das Endprodukt eine Säurezahl von 30 bis 60 mg KOH/g ergeben. Die Grenzviskositätszahl ($CHCl_3$, 20°C) soll nach dieser Reaktionsstufe nicht unter 25 ml/g abgesunken sein. Vorzugsweise liegt dieser Wert für das Endprodukt bei 30 bis 40 ml/g. Nach Erreichen eines Polymerisationsumsatzes von angenähert 100 % kann das Copolymer mit weiterem Hilfslösemittel auf den gewünschten Festkörpergehalt eingestellt werden. Es ist jedoch darauf zu achten, daß der Gehalt an organischen Lösemitteln im verarbeitungsfähigen Klarlack bei einem Festkörpergehalt von 20 bis 30% nicht höher als bei 20 Gew.-% liegt.

Die Formulierung von heißsiegelfähigen Klarlacken muß zur Erzielung von praxisgerechten Ergebnissen eine ausgewählte Lösemittelzusammensetzung aufweisen, durch welche sowohl eine rasche physikalische Trocknung als auch der notwendige Verlauf gewährleistet wird. Die Lösemittel werden im wesentlichen bereits bei der Herstellung der Bindemittel eingebracht.

Die Lacke bestehen im wesentlichen aus 20 bis 30 Gew.-% des Copolymeren, 15 bis 20 Gew.-% eines Lösemittels aus der Gruppe (a) der $C_2$-$C_3$-Alkanole, d. h. Ethanol und/oder ein Propanol, vorzugsweise Isopropanol, (b) der $C_5$-$C_6$-Alkanolacetate, vorzugsweise handelsübliches Amylacetat, (c) der Ketone mit mindestens einem $C_5$-$C_6$-Alkylrest, wie Methylamylketon oder (d) Toluol oder Xylol oder Mischungen dieser Lösemittel, und 50 bis 65 Gew.-% Wasser, welches die für die Erzielung der Wasserverdünnbarkeit durch teilweise oder vollständige Neutralisation der Carboxylgruppen notwendige Menge Ammoniak enthält. Daneben können die Lacke gegebenenfalls weitere Lackhilfsmittel enthalten.

Der Auftrag der Lacke erfolgt beispielsweise mit einer Auslaufviskosität nach DIN 53211/20°C von ca 30 Sekunden bei einem Festkörpergehalt von ca. 25 %. Unter diesen Bedingungen wird eine Grammatur

3

EP 0 316 753 B1

von ca. 5 g (trocken) pro m² Folie erreicht. Weitere Einzelheiten über die Prüfung der Lacke sind den folgenden Beispielen zu entnehmen.

Die folgenden Beispiele erläutern die Erfindung, ohne sie in ihrem Umfang zu beschränken. Alle Angaben in Teilen und Prozenten, beziehen sich soferne nichts anderes angegeben ist, auf Gewichtseinheiten.

Die angegebenen Grenzviskositätszahlen (GVZ) werden in Chloroform bei 20°C bestimmt.

Beispiele 1 bis 6

Alle Angaben betreffend die Mengenverhältnisse, die Reaktionsbedingungen sowie Kenn- und Prüfwerte für die einzelnen Beispiele sind in der nachfolgenden Tabelle zusammengefaßt.

Die Herstellung der Polymeren erfolgt in einem zur Durchführung einer Lösungspolymerisation geeigneten Reaktionsgefäß.

Die Herstellung des Polymeren in Stufe (A) erfolgt unter den in der Tabelle angegebenen Bedingungen. Nach Erreichen eines Polymerisationsumsatzes von mehr als 99 % wird der Ansatz weitere 3 Stunden bei der Reaktionstemperatur gehalten.

Der Polymerisationsinitiator wird (auch in der Stufe (C)) in Lösung, unter Verwendung von jeweils 10 Tlen des als Reaktionsmedium dienenden Lösemittels, zugegeben.

In der Verfahrensstufe (B) wird zur Aktivierung des Inhibitors dauernd ein leichter Luftstrom durch die Reaktionsmasse geleitet.

In der Verfahrensstufe (C) erfolgt zum Erreichen eines vollständigen Reaktionsumsatzes eine mehrmalige Nachgabe des Initiators.

Die Herstellung eines zur Beschichtung von Aluminiumfolien geeigneten Heißsiegellackes erfolgt durch, bezogen auf die gefundene Säurezahl, 80 bis 100 %ige Neutralisation der Carboxylgruppen des Polymeren und Verdünnung mit deionisiertem Wasser auf einen Festkörpergehalt von ca. 25 % bei einer Viskosität entsprechend einer Auslaufzeit nach DIN 53 211/20°C von ca. 30 Sekunden.

Die Prüfung der Produkte erfolgt in folgender Weise:

Lagertest:

Lagerung einer l0%igen wäßrigen Lösung des zu 100 % neutralisierten Polymeren bei 25 bis 40°C (1 Monat/40°C entspricht mehr als 24 Monate/25°C).

Sterilisationsfestigkeit:

Eine mit 30 $\mu$m Naßfilm beschichtete und 10 Sekunden bei 250°C eingebrannte Aluminiumfolie im Format 12 x 5 cm wird bei einer Temperatur von 121°C und einem Druck von 1,4 bar 1 Stunde in einem entsprechenden mit deionisiertem Wasser beschickten Sterilisator behandelt.

Die Folie wird unmittelbar nach Ende des Tests hinsichtlich einer Veränderung (Weißanlaufen, Bläschenbildung) mit einem nicht belasteten Teststück verglichen.

Siegelfestigkeit (Siegelnahtfestigkeit):

Eine entsprechend vorbehandelte Aluminiumfolie, wie sie für den Verschluß von Polystyrolbechern verwendet wird, wird durch Spindelauftrag (30 $\mu$m) mit dem Klarlack beschichtet. Nach einer Trockenzeit von 10 Sekunden bei 250°C wird die beschichtete Folie mit einem Druck von 30 N/cm², 1 Sekunde bei 220°C/240°C gegen Polystyrol gesiegelt (Ringsiegelung). Nach der Siegelung werden aus jedem Probestück 4 Probestreifen von 15 mm Breite auf einem Zugmeßgerät auf die Siegelnahtfestigkeit geprüft. Der Prüfwert wird in Newton als N/15 mm angegeben.

In der Tabelle werden folgende Abkürzungen verwendet:

4

E          Ethanol (techn.)

I          Isopropanol

A          Amylacetat

T          Toluol

X          Xylol

M          Methylisoamylketon

TBO        Di-tertiär-butylperoxid

BPO        Benzoylperoxid

HQ         Hydrochinon

NB         Nitrobenzol

TPP        Triphenylphosphin (eingesetzt als 10%ige Lösung in Xylol)

i.O.       in Ordnung

GVZ        Grenzviskositätszahl (ml/g, $CHCl_3/20°C$)

Tabelle 1

| Beispiel | 1 | 2 | 3 | 4 | 5 | 6 |
|---|---|---|---|---|---|---|
| **STUFE (A)** | | | | | | |
| **Reaktionsansatz (Tle)** | | | | | | |
| Lösemittel | 40 X | 40 A | 45 M | 20 A | 20 T | 40 M |
| | | | | 20 X | 20 A | |
| **Monomere** | | | | | | |
| Methylmethacrylat | 44,7 | 30 | 29.5 | 40 | 45 | 20 |
| Ethylmethacrylat | - | 14,5 | - | - | - | 20 |
| Isopropylmethacrylat | - | - | 10 | - | - | 18 |
| Butylmethacrylat | 44,8 | 55 | 40 | 50 | 45 | 41,3 |
| Ethylacrylat | 10 | - | 20 | - | - | - |
| Butylacrylat | - | - | - | 9,5 | 9,2 | - |
| Glycidylmethacrylat | 0,5 | 0,6 | 0,3 | 0,5 | - | 0,7 |
| Glycidylacrylat | - | - | - | - | 0,8 | - |
| Initiator    TBO | 0,5 | 1,5 | 1,0 | 1,8 | - | 1,7 |
| BPO | - | - | - | - | 3,0 | - |
| **Reaktionsbedingungen** | | | | | | |
| Zugabetemp.. ± 5°C | 130 | 125 | 135 | 130 | 105 | 130 |
| Zugabezeit, Stden. | 5 - 6 | 6 - 7 | 5 - 7 | 6 | 6 - 7 | 6 |
| **Kennwerte (Stufe A)** | | | | | | |
| Festkörpergehalt % | 68 | 67 | 66 | 68 | 68 | 68 |
| GVZ. ml/g | 40 | 45 | 41 | 46 | 43 | 46 |

Tabelle (Fortsetzung)

| Beispiel | 1 | 2 | 3 | 4 | 5 | 6 |
|---|---|---|---|---|---|---|

**STUFE (B)**

**Zugaben (Tle)**

| | 1 | 2 | 3 | 4 | 5 | 6 |
|---|---|---|---|---|---|---|
| Acrylsäure | 0,25 | 0,30 | 0,15 | 0,25 | 0,45 | - |
| Methacrylsäure | - | - | - | - | - | 0,42 |
| Lösemittel | 5 X | 5 X | 5 X | 5 X | 5 J | 5 X |
| Inhibitor HQ | 0,05 | 0,05 | 0,04 | 0,05 | 0,06 | 0,06 |
| NB | 0,05 | 0,05 | 0,04 | 0,05 | 0,06 | 0,06 |
| Zugabetemp. ca. °C | 60 | 70 | 65 | 70 | 60 | 65 |
| Reaktionstemp. ± 5°C | 130 | 120 | 125 | 125 | 105 | 135 |
| Reaktionszeit, Stden | 6 - 7 | 6 - 7 | 7 | 7 | 8 | 6 |

**STUFE (C)**

**Zugaben (Tle)**

| | 1 | 2 | 3 | 4 | 5 | 6 |
|---|---|---|---|---|---|---|
| Lösemittel | 40 J | 30 J | 20 J | 40 J | 25 J | 10 J |
| | | 10 E | 20 E | · | 15 E | 30 E |
| Acrylsäure | 10 | - | - | 12 | - | 9 |
| Methacrylsäure | - | 10 | 15 | - | 13 | - |
| Methylmethacrylat | 40 | 35 | 30 | 23 | 37 | 30 |
| Ethylmethacrylat | - | 15 | - | - | - | - |
| Isobutylmethacrylat | - | - | - | 20 | - | 11 |
| Isopropylmethacrylat | - | - | - | 5 | - | - |
| Butylmethacrylat | 40 | 35 | 50 | 40 | 50 | 50 |
| Ethylacrylat | 10 | - | 5 | - | - | - |
| Butylacrylat | - | 5 | - | - | - | - |

7

Tabelle (Fortsetzung)

| Beispiel | 1 | 2 | 3 | 4 | 5 | 6 |
|---|---|---|---|---|---|---|
| Initiator, Tle BPO | 0,7 | 2,0 | 3,0 | 2,5 | 2,0 | 2,8 |
| Zugabetemp. ± 5°C | 85 | 85 | 80 | 85 | 80 | 85 |
| Zugabezeit, Stden | 4 | 4 - 5 | 5 | 6 | 5 - 6 | 5 |
| Verdünnung mit | I | I | I / E | I / E | I | I/E/T |
|  |  |  | 1 : 1 | 1 : 2 |  | 1:1:1 |

auf 60 % Festkörpergehalt

=================================================================

Kennwerte der Polymeren

| Säurezahl, mg KOH/g | 40 | 35 | 50 | 47 | 44 | 37 |
|---|---|---|---|---|---|---|
| GVZ (ml/g) | 30 | 32 | 29 | 26 | 35 | 30 |

=================================================================

Kennwerte des Klarlackes
und der Beschichtung

| Festkörpergehalt, % | 24,5 | 24 | 26 | 27 | 23 | 23,5 |
|---|---|---|---|---|---|---|
| Viskosität, Sek. (DIN 53211/20°C) | 30 | 25 | 32 | 34 | 38 | 31 |
| pH-Wert, 10 %ig | 9,0 | 6,7 | 9,1 | 8,5 | 9,0 | 8,8 |
| Lagerung, 10 %ig | i.O. | i.O. | i.O. | i.O. | i.O. | i.O. |
| Sterilisationsfestig-keit, 1 h / 121°C | i.O. | i.O. | i.O. | i.O. | i.O. | i.O. |
| Siegelfestigkeit (N/15 mm) | i.O. | i.O. | i.O. | i.O. | i.O. | i.O. |

## Patentansprüche

**Patentansprüche für folgende Vertragsstaaten : BE, CH, DE, FR, GB, IT, LI, NL, SE**

1. Verfahren zur Herstellung von wasserverdünnbaren Bindemittelzusammensetzungen für heißsiegelbare Überzüge auf Aluminiumfolien auf Basis von thermoplastischen Acrylcopolymeren, dadurch gekennzeichnet, daß man

   (A) in einem organischen Lösemittel ein weitgehend radikalfreies Copolymer aus (Meth)-acrylsäurealkylestern, deren Alkylreste 1 bis 4 C-Atome aufweisen, und 0,3 bis 1,0 Gew.-%

(bezogen auf die Summe der eingesetzten Monomeren) Glycidyl(meth)acrylat herstellt, wobei das Copolymer eine Grenzviskositätszahl(CHCl₃, 20°C) von 30 bis 50 ml/g und eine aus der Monomerenzusammensetzung berechnete Glasübergangstemperatur von 30 bis 60°C aufweist,

(B) die Oxirangruppen des Copolymers mit der äquivalenten Menge (Meth)acrylsäure umsetzt und,

(C) gegebenenfalls nach Zugabe eines die Molekularmasse regelnden Lösemittels, eine weitere Monomerenmischung, bestehend aus (Meth)acrylsäurealkylestern, deren Alkylreste 1 bis 4 C-Atome aufweisen, und einer Menge (Meth)acrylsäure, die einer Säurezahl für das Endprodukt von 30 bis 60 mg KOH/g entspricht, copolymerisiert, mit der Maßgabe, daß die Grenzviskositätszahl (CHCl₃, 20°C) des Endproduktes nicht unter 25 ml/g, vorzugsweise bei 30 bis 40 ml/l liegt.

2. Verfahren nach Anspruch 1, dadurch gekennzeichnet, daß man in der Stufe (A) und der Stufe (C), bezogen auf die Menge der jeweils in dieser Stufe eingesetzten Alkylester, bis zu 20 Gew.-% Acrylsäureester einsetzt.

3. Verfahren nach den Ansprüchen 1 und 2, dadurch gekennzeichnet, daß man für die Komponente (A)

20 bis 45 Gew.-% Methylmethacrylat
5 bis 20 Gew.-% Ethyl(meth)acrylat
40 bis 60 Gew.-% Butylmethacrylat
5 bis 20 Gew.-% Isobutylmethacrylat
0,5 bis 0,8 Gew.-% Glycidylacrylat und/oder Glycidylmethacrylat

einsetzt, wobei die Summe der Gewichtsprozente jeweils 100 beträgt.

4. Verfahren nach den Ansprüchen 1 bis 3, dadurch gekennzeichnet, daß man in der Stufe (B) die Umsetzung in Gegenwart eines Polymerisationsinhibitors vornimmt.

5. Verfahren nach den Ansprüchen 1 bis 4, dadurch gekennzeichnet, daß man in der Stufe (C) C₂-C₃-Alkanole als regelnde Lösemittel einsetzt.

6. Thermoplastische Acrylcopolymere hergestellt entsprechend den Ansprüchen 1 bis 5.

7. Heißsiegellack bestehend aus 20 bis 30 Gew.-% von thermoplastischen Acrylcopolymeren nach Anspruch 6, 15 bis 20 Gew.% eines Lösemittels aus der Gruppe (a) der C₂-C₃-Alkanole, (b) der C₅-C₆-Alkanolacetate, (C) der Ketone mit mindestens einem C₅-C₆-Alkylrest und (d) Toluol und Xylol oder Mischungen dieser Lösemittel, 50 bis 65 Gew.-% Wasser, welches die für die Erzielung der Wasserverdünnbarkeit durch teilweise oder vollständige Neutralisation der Carboxylgruppen notwendigen Menge Ammoniak enthält, und gegebenenfalls den üblichen Lackhilfsmitteln.

8. Verwendung der Heißsiegellacke nach Anspruch 7, zur Beschichtung von Aluminiumfolien für die Abdeckung von Verpackungen, insbesonders für Lebensmittel.

**Patentansprüche für folgende Vertragsstaaten : ES, GR**

1. Verfahren zur Herstellung von wasserverdünnbaren Bindemittelzusammensetzungen für heißsiegelbare Überzüge auf Aluminiumfolien auf Basis von thermoplastischen Acrylcopolymeren, <u>dadurch gekennzeichnet, daß man</u>

(A) in einem organischen Lösemittel ein weitgehend radikalfreies Copolymer aus (Meth)-acrylsäurealkylestern, deren Alkylreste 1 bis 4 C-Atome aufweisen, und 0,3 bis 1,0 Gew.-% (bezogen auf die Summe der eingesetzten Monomeren) Glycidyl(meth)acrylat herstellt, wobei das Copolymer eine Grenzviskositätszahl(CHCl₃, 20°C) von 30 bis 50 ml/g und eine aus der Monomerenzusammensetzung berechnete Glasübergangstemperatur von 30 bis 60°C aufweist,

(B) die Oxirangruppen des Copolymers mit der äquivalenten Menge (Meth)acrylsäure umsetzt und,

(C) gegebenenfalls nach Zugabe eines die Molekularmasse regelnden Lösemittels, eine weitere Monomerenmischung, bestehend aus (Meth)acrylsäurealkylestern, deren Alkylreste 1 bis 4 C-Atome aufweisen, und einer Menge (Meth)acrylsäure, die einer Säurezahl für das Endprodukt von 30 bis 60 mg KOH/g entspricht, copolymerisiert, mit der Maßgabe, daß die Grenzviskositätszahl (CHCl₃, 20°C) des Endproduktes nicht unter 25 ml/g, vorzugsweise bei 30 bis 40 ml/l liegt.

2. Verfahren nach Anspruch 1, dadurch gekennzeichnet, daß man in der Stufe (A) und der Stufe (C), bezogen auf die Menge der jeweils in dieser Stufe eingesetzten Alkylester, bis zu 20 Gew.-% Acrylsäureester einsetzt.

3. Verfahren nach den Ansprüchen 1 und 2, dadurch gekennzeichnet, daß man für die Komponente (A)
20 bis 45 Gew.-% Methylmethacrylat
5 bis 20 Gew.-% Ethyl(meth)acrylat
40 bis 60 Gew.-% Butylmethacrylat
5 bis 20 Gew.-% Isobutylmethacrylat
0,5 bis 0,8 Gew.-% Glycidylacrylat und/oder Glycidylmethacrylat
einsetzt, wobei die Summe der Gewichtsprozente jeweils 100 beträgt.

4. Verfahren nach den Ansprüchen 1 bis 3, dadurch gekennzeichnet, daß man in der Stufe (B) die Umsetzung in Gegenwart eines Polymerisationsinhibitors vornimmt.

5. Verfahren nach den Ansprüchen 1 bis 4, dadurch gekennzeichnet, daß man in der Stufe (C) $C_2$-$C_3$-Alkanole als regelnde Lösemittel einsetzt.

**Claims**
**Claims for the following Contracting States : BE, CH, DE, FR, GB, IT, LI, NL, SE**

1. Process for the preparation of water-dilutable binder compositions for heat-sealable coatings on aluminium foils based on thermoplastic acrylic copolymers, characterised in that
(A) a substantially radical-free copolymer is prepared in an organic solvent from alkyl (meth)-acrylates whose alkyl radicals have 1 to 4 carbon atoms, and from 0.3 to 1.0% by weight (based on the total amount of monomers employed) of glycidyl (meth)acrylate, where the copolymer has an intrinsic viscosity ($CHCl_3$, 20°C) of from 30 to 50 ml/g and a glass transition temperature, calculated from the monomer composition, from 30 to 60°C,
(B) the oxirane groups of the copolymer are reacted with the equivalent amount of (meth)acrylic acid, and
(C) if appropriate after addition of a solvent which regulates the molecular weight, a further monomer mixture comprising alkyl (meth)acrylates whose alkyl radicals have 1 to 4 carbon atoms, and an amount of (meth)acrylic acid which corresponds to an acid number of from 30 to 60 mg KOH/g for the end product, are copolymerised, with the proviso that the intrinsic viscosity ($CHCl_3$, 20°C) of the end product is not less than 25 ml/g, preferably from 30 to 40 ml/l.

2. Process according to Claim 1, characterised in that step (A) and step (C) are carried out using up to 20% by weight of acrylates, based on the amount of alkyl esters employed in each of these steps.

3. Process according to Claims 1 and 2, characterised in that, for component (A),
from 20 to 45% by weight of methyl methacrylate,
from 5 to 20% by weight of ethyl (meth)acrylate,
from 40 to 60% by weight of butyl methacrylate,
from 5 to 20% by weight of isobutyl methacrylate,
from 0.5 to 0.8% by weight of glycidyl acrylate and/or glycidyl methacrylate,
are employed, where the sum of the percentages by weight is in each case 100.

4. Process according to Claims 1 to 3, characterised in that the reaction in step (B) is carried out in the presence of a polymerisation inhibitor.

5. Process according to Claims 1 to 4, characterised in that the regulating solvents employed in step (C) are $C_2$-$C_3$-alkanols.

6. Thermoplastic acrylic copolymers prepared according to Claims 1 to 5.

7. Heat-sealable coating material comprising from 20 to 30% by weight of thermoplastic acrylic copolymers according to Claim 6, from 15 to 20% by weight of a solvent from group (a) the $C_2$-$C_3$-alkanols, (b) the $C_5$-$C_6$-alkanol acetates, (c) the ketones containing at least one $C_5$-$C_6$-alkyl radical and (d) toluene and xylene, or mixtures of these solvents, from 50 to 65% by weight of water containing the amount of ammonia necessary to achieve the water-dilutability by neutralisation of some or all of the carboxyl groups, and, if desired, conventional coating additives.

8.  Use of the heat-sealable coating materials according to Claim 7 for coating aluminium foils for covering packages, in particular for foodstuffs.

**Claims for the following Contracting States : ES, GR**

1.  Process for the preparation of water-dilutable binder compositions for heat-sealable coatings on aluminium foils based on thermoplastic acrylic copolymers, characterised in that
    (A) a substantially radical-free copolymer is prepared in an organic solvent from alkyl (meth)-acrylates whose alkyl radicals have 1 to 4 carbon atoms, and from 0.3 to 1.0% by weight (based on the total amount of monomers employed) of glycidyl (meth)acrylate, where the copolymer has an intrinsic viscosity ($CHCl_3$, 20°C) of from 30 to 50 ml/g and a glass transition temperature, calculated from the monomer composition, from 30 to 60°C,
    (B) the oxirane groups of the copolymer are reacted with the equivalent amount of (meth)acrylic acid, and
    (C) if appropriate after addition of a solvent which regulates the molecular weight, a further monomer mixture comprising alkyl (meth)acrylates whose alkyl radicals have 1 to 4 carbon atoms, and an amount of (meth)acrylic acid which corresponds to an acid number of from 30 to 60 mg KOH/g for the end product, are copolymerised, with the proviso that the intrinsic viscosity ($CHCl_3$, 20°C) of the end product is not less than 25 ml/g, preferably from 30 to 40 ml/l.

2.  Process according to Claim 1, characterised in that step (A) and step (C) are carried out using up to 20% by weight of acrylates, based on the amount of alkyl esters employed in each of these steps.

3.  Process according to Claims 1 and 2, characterised in that, for component (A),
    from 20 to 45% by weight of methyl methacrylate,
    from 5 to 20% by weight of ethyl (meth)acrylate,
    from 40 to 60% by weight of butyl methacrylate,
    from 5 to 20% by weight of isobutyl methacrylate,
    from 0.5 to 0.8% by weight of glycidyl acrylate and/or glycidyl methacrylate,
    are employed, where the sum of the percentages by weight is in each case 100.

4.  Process according to Claims 1 to 3, characterised in that the reaction in step (B) is carried out in the presence of a polymerisation inhibitor.

5.  Process according to Claims 1 to 4, characterised in that the regulating solvents employed in step (C) are $C_2$-$C_3$-alkanols.

**Revendications**
**Revendications pour les Etats contractants suivants : BE, CH, DE, FR, GB, IT, LI, NL, SE**

1.  Procédé de préparation de compositions de liants diluables à l'eau pour revêtements thermosoudables de feuilles d'aluminium à base de copolymères acryliques thermoplastiques, caractérisé en ce que
    (A) on prépare dans un solvant organique un copolymère sensiblement exempt de radicaux à partir d'alkylesters d'acide (méth)acrylique, dont les restes alkyle présentent 1 à 4 atomes de carbone, et de 0,3 à 1,0% en poids (par rapport à la somme des monomères utilisés) de (méth)acrylate de glycidyle, le copolymère présentant un indice de viscosité limite ($CHCl_3$, 20°C) de 30 à 50 ml/g et une température de transition vitreuse, calculée sur la base de la composition de monomères, de 30 à 60°C,
    (B) on fait réagir les groupes oxiranne du copolymère avec la quantité équivalente d'acide (méth)-acrylique et
    (C) éventuellement après addition d'un solvant régulateur de la masse moléculaire, on copolymérise un autre mélange de monomères qui consiste en alkylesters de l'acide (méth)acrylique, dont les restes alkyle présentent 1 à 4 atomes de carbone, et en une quantité d'acide (méth)acrylique qui correspond à un indice d'acide pour le produit final de 30 à 60 mg de KOH/g, de manière que l'indice de viscosité limite ($CHCl_3$, 20°C) du produit final ne soit pas inférieur à 25 ml/g, et de

EP 0 316 753 B1

préférence soit compris entre 30 et 40 ml/g.

**2.** Procédé selon la revendication 1, caractérisé en ce que, dans l'étape (A) et dans l'étape (C), on utilise jusqu'à 20% en poids d'esters d'acide acrylique par rapport à la quantité d'alkylesters utilisés dans cette étape.

**3.** Procédé selon les revendications 1 et 2, caractérisé en ce que l'on utilise pour le composant (A)
20 à 45% en poids de méthacrylate de méthyle
5 à 20% en poids de (méth)acrylate d'éthyle
40 à 60% en poids de méthacrylate de butyle
5 à 20% en poids de méthacrylate d'isobutyle
0,5 à 0,8% en poids d'acrylate de glycidyle et/ou de méthacrylate de glycidyle,
la somme des pourcentages en poids étant égale à 100 dans chaque cas.

**4.** Procédé selon les revendications 1 à 3, caractérisé en ce que, dans l'étape (B), on conduit la réaction en présence d'un inhibiteur de polymérisation.

**5.** Procédé selon les revendications 1 à 4, caractérisé en ce que, dans l'étape (C), on utilise des alcanols en $C_2$-$C_3$ comme solvants régulateurs.

**6.** Copolymères acryliques thermoplastiques préparés selon les revendications 1 à 5.

**7.** Peinture thermosoudable consistant en 20 à 30% en poids de copolymères acryliques thermoplastiques selon la revendication 6, 15 à 20% en poids d'un solvant du groupe (a) des alcanols en $C_2$-$C_3$, (b) des acétates d'alcanols en $C_5$-$C_6$, (c) des cétones ayant au moins un reste alkyle en $C_5$-$C_6$ et (d) du toluène et du xylène ou de mélanges de ces solvants, 50 à 65% en poids d'eau, qui contient la quantité d'ammoniac nécessaire pour l'obtention de la diluabilité à l'eau par neutralisation partielle ou totale des groupes carboxyle, et éventuellement en les adjuvants de peinture courants.

**8.** Utilisation des peintures thermosoudables selon la revendication 7 pour le revêtement de feuilles d'aluminium pour le recouvrement d'emballages, en particulier pour produits alimentaires.

**Revendications pour les Etats contractants suivants : ES, GR**

**1.** Procédé de préparation de compositions de liants diluables à l'eau pour revêtements thermosoudables de feuilles d'aluminium à base de copolymères acryliques thermoplastiques, caractérisé en ce que
(A) on prépare dans un solvant organique un copolymère sensiblement exempt de radicaux à partir d'alkylesters d'acide (méth)acrylique, dont les restes alkyle présentent 1 à 4 atomes de carbone, et de 0,3 à 1,0% en poids (par rapport à la somme des monomères utilisés) de (méth)acrylate de glycidyle, le copolymère présentant un indice de viscosité limite ($CHCl_3$, 20°C) de 30 à 50 ml/g et une température de transition vitreuse, calculée sur la base de la composition de monomères, de 30 à 60°C,
(B) on fait réagir les groupes oxiranne du copolymère avec la quantité équivalente d'acide (méth)-acrylique et
(C) éventuellement après addition d'un solvant régulateur de la masse moléculaire, on copolymérise un autre mélange de monomères qui consiste en alkylesters de l'acide (méth)acrylique, dont les restes alkyle présentent 1 à 4 atomes de carbone, et en une quantité d'acide (méth)acrylique qui correspond à un indice d'acide pour le produit final de 30 à 60 mg de KOH/g, de manière que l'indice de viscosité limite ($CHCl_3$, 20°C) du produit final ne soit pas inférieur à 25 ml/g, et de préférence soit compris entre 30 et 40 ml/g.

**2.** Procédé selon la revendication 1, caractérisé en ce que, dans l'étape (A) et dans l'étape (C), on utilise jusqu'à 20% en poids d'esters d'acide acrylique par rapport à la quantité d'alkylesters utilisés dans cette étape.

**3.** Procédé selon les revendications 1 et 2, caractérisé en ce que l'on utilise pour le composant (A) 20 à 45% en poids de méthacrylate de méthyle
5 à 20% en poids de (méth)acrylate d'éthyle

12

40 à 60% en poids de méthacrylate de butyle

5 à 20% en poids de méthacrylate d'isobutyle

0,5 à 0,8% en poids d'acrylate de glycidyle et/ou de méthacrylate de glycidyle,

la somme des pourcentages en poids étant égale à 100 dans chaque cas.

4. Procédé selon les revendications 1 à 3, caractérisé en ce que, dans l'étape (B), on conduit la réaction en présence d'un inhibiteur de polymérisation.

5. Procédé selon les revendications 1 à 4, caractérisé en ce que, dans l'étape (C), on utilise des alcanols en $C_2$-$C_3$ comme solvants régulateurs.